# EUROPÄISCHE PATENTSCHRIFT

(11) **EP 3 721 119 B1**
(45) Veröffentlichungstag und Bekanntmachung des Hinweises auf die Patenterteilung: **05.01.2022**
(21) Anmeldenummer: 18811501.8
(22) Anmeldetag: 27.11.2018
(51) Int. Cl.: F16H 59/10

(54) **VORRICHTUNG ZUR FAHRSTUFENAUSWAHL**
DEVICE FOR GEAR STAGE SELECTION
DISPOSITIF DE SÉLECTION DES PLAGES DE VITESSE

(30) Priorität: 04.12.2017 DE 102017221817
(43) Veröffentlichungstag der Anmeldung: 14.10.2020
(73) Patentinhaber: Volkswagen Aktiengesellschaft, 38440 Wolfsburg (DE)
(72) Erfinder: BLEY, Bernhard, 30169 Hannover (DE); LÖHNER, Andreas, 38159 Vechelde (DE); WÖHL-BRUHN, Henning, 38162 Cremlingen (DE); VON SEHLEN, Oliver, 29358 Eicklingen (DE)
(86) Internationale Anmeldenummer: PCT/EP2018/082748
(87) Internationale Veröffentlichungsnummer: WO 2019/110379

(56) Entgegenhaltungen:
- WO-A1-2005/040644
- JP-A- H0 680 040
- JP-A- 2011 065 468
- US-A1- 2007 101 819

## Beschreibung

Die Erfindung betrifft eine Vorrichtung zur Fahrstufenauswahl für ein Kraftfahrzeug, insbesondere für ein Automatikgetriebefahrzeug oder Elektrofahrzeug.

Kraftfahrzeuge, insbesondere die mit einem Automatikgetriebe oder mit einem Elektroantrieb, sind üblicherweise mit Vorrichtung zur Fahrstufenauswahl ausgestattet um dem Fahrer die Wahl der gewünschten Fahrstufe zu ermöglichen. Die gewünschte Fahrstufe kann z. B. eine Fahrrichtung, eine Neutralstellung, eine Parkstellung, ein Fahrprogramm oder ein bestimmter Getriebegang bzw. Getriebeübersetzung sein. Die Vorrichtung weist üblicherweise ein von dem Fahrer bewegliches Bedienelement auf, durch dessen Bewegung wenigstens einige der wählbaren Fahrstufen wählbar sind. Das Bedienelement kann ein Wählhebel, ein Joystick, einen Kippschalter, einen Schieber oder ein anderes relativ zu der Vorrichtung bewegbares und vom Fahrer betätigbares Element sein. Die Vorrichtung umfasst üblicherweise eine Schaltbetätigung, in der typischerweise das Bedienelement aufgenommen bzw. gelagert wird, und die fest mit einer Fahrzeugstruktur verbunden ist. Weiterhin umfasst die Vorrichtung eine Schaltabdeckung, welche die Schaltbetätigung in Richtung Fahrzeuginterieur abdeckt. Das Bedienelement ragt typischerweise durch die Schaltabdeckung heraus und ist von der Schaltabdeckung mechanisch entkoppelt. Die Schaltabdeckung kann Betätigungselemente und insbesondere Leuchtmittel oder Anzeigemittel umfassen, die dem Fahrer Informationen über gewählte bzw. wählbare Fahrstufen vermitteln können. Weiterhin umfasst die Vorrichtung eine elektronische Steuerungseinheit, welche die Leuchtmittel bzw. Anzeigemittel ansteuern kann, die Informationen von den Betätigungsmittel verarbeiten kann und mit wenigstens einem anderen Steuergerät des Kraftfahrzeugs in Verbindung stehen kann, typischerweise mit einem Getriebesteuergerät bzw. einem Motorsteuergerät. Das Bedienelement weist auch Leuchtmittel und/oder weitere Betätigungselement auf, die in einer elektrischen Verbindung mit einer zuständigen elektronischen Steuerungseinheit stehen müssen. Weil das Bedienelement beweglich an der Schaltbetätigung angebracht ist, muss diese elektrische Verbindung wenigstens teilweise flexibel sein. Um die mechanische Beanspruchung des flexiblen Teils der elektrischen Verbindung zu senken, soll sie möglicherweise keine sehr engen Radien beinhalten bzw. keinen großen relativen Bewegungen unterzogen werden.

Üblicherweise wird heutzutage die Fahrstufe durch Leuchtmittel in Form von LEDs (LED; Englisch: Light Emitting Device) in einer Schaltabdeckung angezeigt. Dabei werden in der Regel alle Fahrstufen der Fahrstufenanzeige durch die LEDs als Suchbeleuchtung grundausgeleuchtet. Die Schaltabdeckung ist dabei auf einer Schaltbetätigung montiert, über welche die aktuelle Fahrstufe eingestellt wird. Entsprechend der über die Schaltbetätigung aktuell eingestellten Fahrstufe wird von der Schaltbetätigung eine der aktuell eingestellten Fahrstufe entsprechende LED derart angesteuert, dass diese mit einer erhöhten Helligkeit, einer sogenannten Spot-Ausleuchtung, ausgeleuchtet wird, welche sich deutlich von der Helligkeit der anderen, lediglich grundausgeleuchteten LEDs der anderen Fahrstufen abhebt. Die Steuerung der Helligkeit der einzelnen LEDs erfolgt dabei herkömmlicherweise über eine Puls-Weiten-Modulation (PWM). LEDs weisen nämlich unterschiedliche Parameter und/oder Kennlinien auf, was für eine gleichmäßige Grundausleuchtung und jeweilige Spot-Ausleuchtung eine spezielle Parameter und/oder Kennlinien abhängige Auswahl und Sortierung der LEDs und beispielsweise von deren Widerständen, wie Vorwiderständen, und/oder eine spezielle Parameter und/oder Kennlinien abhängige Ansteuerung erfordert. Eine Parameter und/oder Kennlinien abhängige Auswahl und Sortierung der LEDs und beispielsweise von deren Widerständen, zum Beispiel zur Vermeidung einer sichtbaren Farbortverschiebung, ist jedoch sehr aufwändig und kostspielig. Da die mit den LEDs ausgestattete Schaltabdeckung und die ansteuernde Schaltbetätigung in der Regel unabhängig voneinander hergestellt werden, ist auch eine spezielle Parameter und/oder Kennlinien abhängige Ansteuerung der LEDs der Schaltabdeckung durch die Schaltbetätigung aufwändig und kostspielig.

Aus der JPH 6-80040 ist eine Wählhebelvorrichtung bekannt, die eine Schaltbetätigung mit einem bewegbar gelagerten Wählhebel aufweist. Unten an der Schaltbetätigung ist eine elektronische Steuereinheit angebracht, die mit dem Wählhebel über eine elektronische Leitung in Verbindung steht. Weil die Steuereinheit im unteren Bereich der Schaltbetätigung angeordnet ist, kann die elektrische Leitung von unten zu dem kippbaren Wählhebel im Bereich der kleinsten relativen Bewegungen geführt werden. Es ist keine Abdeckung der Wählhebelvorrichtung offenbart.

Ähnlich offenbart die JP 2011-065468 A eine Wählhebelvorrichtung, bei dem unten an der Schaltbetätigung eine elektronische Steuereinheit angebracht ist, die mit dem Wählhebel über eine elektronische Leitung in Verbindung steht. Die Schaltbetätigung ist in Richtung Fahrzeuginterieur durch eine Schaltabdeckung abdeckt.

Weiterhin ist aus der WO 2005/040644 A1 eine Wählhebelvorrichtung bekannt, bei dem der Wählhebel über eine elektronische Leitung mit der Schaltbetätigung in Verbindung steht. Die Schaltbetätigung ist in Richtung Fahrzeuginterieur durch eine Schaltabdeckung abdeckt.

Die noch nicht veröffentlichte DE 10 2017 206 818 offenbart eine Fahrstufenwählvorrichtung, bei der die elektrische Steuereinheit zum Ansteuern der Leuchtmittel in der Schaltabdeckung angeordnet ist. Die Schaltabdeckung ist mit der Schaltbetätigung fest verbunden, es sind aber zwei separate Bauteile. Die Schaltbetätigung kann fahrzeugabhängig mit mehreren unterschiedlichen Schaltabdeckungen kombiniert werden, womit diese für eine Vielfalt von Fahrzeugen mit unterschiedlichen Designs benutzt werden kann. Eine elektrische Verbindung eines beweglichen Bedienelementes ist nicht offenbart.

Die im Stand der Technik bekannten Fahrstufenwählvorrichtung sind jedoch noch nicht optimal ausgebildet.

Der Erfindung liegt daher die Aufgabe zu Grunde, die eingangs genannte Vorrichtung zur Fahrstufenauswahl für ein Kraftfahrzeug, derart auszugestalten und weiterzubilden, dass eine hoch zuverlässige Konstruktion erreicht wird, die gleichzeitig auf einfache und kostengünstige Weise eine modulare Bauweise ermöglicht.

Die der Erfindung zugrunde liegende Aufgabe wird durch eine Vorrichtung zur Fahrstufenauswahl für ein Kraftfahrzeug, insbesondere für ein Automatikgetriebefahrzeug oder Elektrofahrzeug, mit den Merkmalen des Patentanspruchs 1 gelöst.

Die Vorrichtung zur Fahrstufenauswahl für ein Kraftfahrzeug, insbesondere ein Automatikgetriebefahrzeug oder Elektrofahrzeug, umfasst eine Schaltbetätigung, eine Schaltabdeckung und ein relativ zur Schaltbetätigung bewegbares Bedienelement. Die Schaltabdeckung ist mit der Schaltbetätigung fest verbunden, insbesondere können diese eine Montageeinheit bilden, es sind aber vorteilhaft zwei separate Bauteile. Die Schaltabdeckung deckt die Schaltbetätigung in Richtung Fahrzeuginterieur ab. Vorteilhaft kann eine Schaltbetätigung mit mehreren Schaltabdeckungen kombiniert werden, womit diese für eine Vielfalt von Fahrzeugen mit unterschiedlichen Designs benutzt werden kann. Die Schaltabdeckung umfasst eine elektronische Steuerungseinheit, die vorteilhafterweise mit einem Bordnetz und wenigstens einem anderen Steuergerät des Kraftfahrzeugs in Verbindung stehen kann, typischerweise mit einem Getriebesteuergerät bzw. einem Motorsteuergerät. Das Bedienelement ist über wenigstens eine erste elektrische Leitung mit der Schaltabdeckung verbunden. Somit kann das Bedienelement mit der elektronischen Steuereinheit kommunizieren. Die erste elektrische Leitung ist vorteilhaft wenigstens abschnittweise flexible ausgeführt.

Die Schaltabdeckung kann eine erste Schnittstelle und das Bedienelement eine zweite Schnittstelle aufweisen. Die Schnittstellen können Steckverbindungen sein.

In dem ersten Ausführungsbeispiel verbindet die erste elektrische Leitung unmittelbar das Bedienelement und die Schaltabdeckung, insbesondere verbindet die erste elektrische Leitung die erste Schnittstelle und die zweite Schnittstelle direkt. Die Ausdrücke "unmittelbar" und "direkt" sind nicht eng räumlich zu verstehen, sondern verbindungstechnisch. Die erste elektrische Leitung kann mehrere Verbindungselemente umfassen. Somit ist eine sehr kostengünstige und einfache Konstruktion geschaffen.

Nach dem zweiten Ausführungsbeispiel der Erfindung kann die erste elektrische Leitung durch die Schaltbetätigung verlaufen, nämlich ein Abschnitt der ersten elektrischen Leitung wird von der Schaltbetätigung bewerkstelligt. Somit kann die erste elektrische Leitung vorteilhaft platziert werden um die mechanische Beanspruchung zu senken und der Zusammenbau der ganzen Vorrichtung kann vereinfacht werden.

Die Schaltbetätigung kann in diesem Fall vorteilhafterweise eine dritte Schnittstelle und eine vierte Schnittstelle aufweisen, wobei die erste elektrische Leitung wenigstens eine Zwischenleitung umfasst. Die Zwischenleitung verbindet insbesondere dann die dritte Schnittstelle und die vierte Schnittstelle. Dadurch kann sehr einfache Montage des Bedienelementes und der Schaltabdeckung erreicht werden. Die Schaltbetätigung beinhaltet nämlich typischerweise auch elektrische/elektronische Bauteile, die z. B. Informationen über der Lage des Bedienelementes liefern, deswegen kommuniziert die Schaltbetätigung mit der elektronischen Steuerungseinheit der Schaltabdeckung. Es ist eine Schnittstelle für die Kommunikation bzw. Kontaktierung zwischen der Schaltabdeckung und der Schalbetätigung aus diesem Grund ohnehin vorhanden. Diese Schnittstelle kann auch wenigstens teilweise für Kommunikation zwischen dem Bedienelement und der Schaltabdeckung verwendet werden. Die erste elektrische Leitung verläuft dann von der ersten Schnittstelle der Schaltabdeckung über dritte Schnittstelle der Schaltbetätigung, die Zwischenleitung in der Schaltbetätigung und die vierte Schnittstelle der Schaltbetätigung zu der zweiten Schnittstelle des Bedienelements.

Es kann dadurch eine universelle Montageeinheit der Schaltbetätigung mit dem Bedienelement fertig gestellt werden und dann mit einer zuständigen Schaltabdeckung mit Kontaktierung der einzigen Verbindung realisiert werden, indem nämlich lediglich die erste und dritte Schnittstelle verbunden werden.

Das Bedienelement weist vorteilhaft wenigstens ein Leuchtmittel auf, wobei die elektronische Steuerungseinheit der Schaltabdeckung zur Ansteuerung des Leuchtmittels eingerichtet ist. Das Leuchtmittel ist vorteilhafterweise ein LED. Vorteilhaft kann das Bedienelement wenigstens ein Betätigungselement aufweisen, wobei die elektronische Steuerungseinheit zur Kommunikation mit dem Betätigungselement eingerichtet ist.

Die Schaltabdeckung umfasst vorteilhafterweise wenigstens ein weiteres Bedienelement, insbesondere eine Taste, vorzugsweise eine Parksperrebetätigungstaste.

Das Bedienelement kann über wenigstens eine zweite elektrische Leitung mit einem Bordnetz verbunden ist. Diese zweite elektrische Leitung kann ein Bestandteil der ersten elektrischen Leitung oder eine separate Leitung sein. Die zweite elektrische Leitung kann auch durch die Schaltbetätigung verlaufen. Da die Schaltbetätigung typischerweise auch mit dem Bordnetz in Verbindung steht, ist es vorteilhaft wenn sich die zweite elektrische Verbindung in der Schaltbetätigung abzweigt und in der Schaltbetätigung mit dem Bordnetz verbunden ist.

Die erste und zweite elektrische Leitung bzw. die Zwischenleitung sind nicht als eine ein einziges Kabel zu verstehen, sondern sie weisen vorteilhaft mehrere Kabel bzw. mehrere Leitungen auf, die zur Übertragung vom Strom und/oder elektrischen/elektronischen Signale vorgesehen sind.

Es gibt nun eine Vielzahl von Möglichkeiten, die erfindungsgemäße Vorrichtung in vorteilhafter Art und Weise auszugestalten und weiterzubilden. Hierfür darf zunächst auf die dem Patentanspruch 1 nachgeordneten Patentansprüche verwiesen werden. Im Folgenden werden die bevorzugten Ausgestaltungen der erfindungsgemäßen Vorrichtung anhand der Zeichnung und der dazugehörigen Beschreibung näher erläutert. In der Zeichnung zeigt:
- Fig. 1: eine schematische Darstellung der Vorrichtung zur Fahrstufenauswahl,
- Fig. 2: die erste Ausführungsform der erfindungsgemäßen Vorrichtung;
- Fig. 3: die zweite Ausführungsform der erfindungsgemäßen Vorrichtung.

Fig . 1 zeigt eine erfindungsgemäße Vorrichtung 1 zur Fahrstufenauswahl. In der Schaltbetätigung 2 ist beweglich ein Bedienelement 4 angebracht, mit dem der Fahrer unterschiedliche Fahrstufen wählen kann. Das Bedienelement 4 kann z. B. ein Hebe, ein Schieber oder eine kippbare Rippe sein. An der Schaltbetätigung 2 ist eine Schaltabdeckung 3 angebracht, welche eine elektronische Steuerungseinheit 31 umfasst. Die Schaltabdeckung 3 umfasst weiterhin mehrere Leuchtmittel 34, die dem Fahrer Informationen über wählbare bzw. gewählte Fahrstufen vermitteln und die von der Steuerungseinheit 31 angesteuert werden. Die Schaltabdeckung weist auch wenigstens ein Betätigungselement, nämlich unterschiedliche Funktionstasten, insbesondere eine Taste 33, mit der der Fahrer das Einlegen einer Parksperre auswählen kann. Die Betätigungselemente stehen in Verbindung mit der Steuerungseinheit 31.

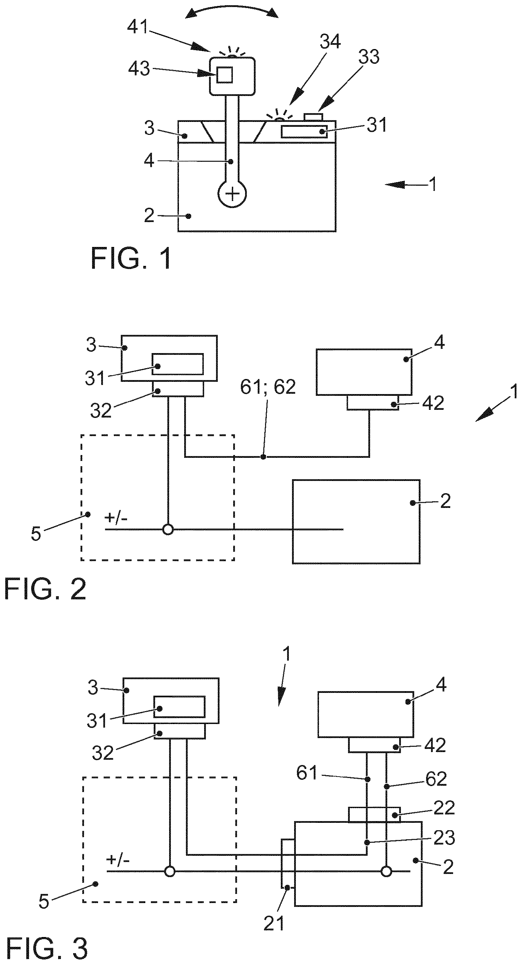

Das Bedienelement 4 weist Leuchtmittel 41, das z.B. zur Grundausleuchtung des Bedienelementes 4 dient und/oder dem Fahrer weitere Informationen vermitteln kann. Weiterhin weist das Bedienelement 4 ein Betätigungselement 43, das z.B. zur Wahl eines Fahrprogramms oder zur Bestätigung von Wahl manchen Fahrstufen betätigt werden muss. Die erste erfindungsgemäße Ausführungsform zeigt die Fig. 2. Das Bedienelement 4 ist über die erste elektrische Leitung 61 direkt mit der Schaltabdeckung 3 verbunden, nämlich die erste Leitung 61 erstreckt sich zwischen der zweiten Schnittstelle 42 des Bedienelements 4 und der ersten Schnittstelle 32 der Schaltabdeckung. Dadurch wird die elektronische Steuerungseinheit 31 mit dem Leuchtmittel 41 und dem Betätigungselement 43 verbunden. Die erste elektrische Leitung 61 kann auch ein Teil eines Kabelbaums sein, der ein Bestandteil eines Bordnetzes 5 des Fahrzeugs ist.

Die zweite erfindungsgemäße Ausführungsform zeigt die Fig. 2. Die Schaltbetätigung ist mit einer Zwischenleitung 23 versehen, die zwischen der dritten Schnittstelle 21 und der vierten Schnittstelle 22 verläuft. Die Zwischenleitung 23 bildet ein Teil der ersten Leitung 61. Die erste elektrische Leitung verläuft nämlich von der ersten Schnittstelle 31 der Schaltabdeckung 3 über dritte Schnittstelle 21 der Schaltbetätigung 2, die Zwischenleitung 23 in der Schaltbetätigung 2 und die vierte Schnittstelle 22 der Schaltbetätigung 2 zu der zweiten Schnittstelle 42 des Bedienelements 4. Die Schnittstellen sind vorteilhaft als Steckerverbindungen ausgeführt.

Das Bedienelement ist über eine zweite elektrische Leitung 62 mit dem Bordnetz 5, insbesondere mit der Stromversorgung verbinden. Die zweite elektrische Leitung 62 kann ein Teil der ersten elektrischen Leitung 61 sein oder kann separat verlaufen. Überdies kann die zweite elektrische Leitung 62 durch die Schaltbetätigung 2 verlaufen, insbesondere wie in der Fig. 2 gezeigt, in der Schaltbetätigung 2 an die Stromversorgung des Bordnetzes 5 angebunden sein.

## Patentansprüche

1. Vorrichtung (1) zur Fahrstufenauswahl für ein Kraftfahrzeug, insbesondere ein Automatikgetriebefahrzeug oder Elektrofahrzeug, umfassend eine Schaltbetätigung (2), eine Schaltabdeckung (3) und ein relativ zur Schaltbetätigung (2) bewegbares Bedienelement (4), wobei die Schaltabdeckung (3) die Schaltbetätigung (2) in Richtung Fahrzeuginterieur abdeckt und fest mit der Schaltbetätigung (2) verbunden ist, und wobei die Schaltabdeckung (3) eine elektronische Steuerungseinheit (31) umfasst, **dadurch gekennzeichnet, dass** das Bedienelement (4) über wenigstens eine erste elektrische Leitung (61) mit der Schaltabdeckung (3) verbunden ist.

2. Vorrichtung nach dem Anspruch 1, **dadurch gekennzeichnet, dass** die Schaltabdeckung (3) eine erste Schnittstelle (32) und dass das Bedienelement (4) eine zweite Schnittstelle (42) aufweist.

3. Vorrichtung nach einem der vorstehenden Ansprüche, **dadurch gekennzeichnet, dass** die erste elektrische Leitung (61) unmittelbar das Bedienelement (4) und die Schaltabdeckung (3) verbindet, insbesondere das die erste elektrische Leitung (61) die erste Schnittstelle (32) und die zweite Schnittstelle (42) direkt verbindet.

4. Vorrichtung nach dem Anspruch 1 oder 2, **dadurch gekennzeichnet, dass** die erste elektrische Leitung (61) durch die Schaltbetätigung (2) verläuft.

5. Vorrichtung nach dem Anspruch 4, **dadurch gekennzeichnet, dass** die Schaltbetätigung (2) eine dritte Schnittstelle (21) und eine vierte Schnittstelle (22) aufweist, wobei die erste elektrische Leitung (61) wenigstens eine Zwischenleitung (23) umfasst, insbesondere dass die Zwischenleitung (23) die dritte Schnittstelle (21) und die vierte Schnittstelle (22) verbindet.

6. Vorrichtung nach einem der vorstehenden Ansprüche, **dadurch gekennzeichnet, dass** das Bedienelement (4) wenigstens ein Leuchtmittel (41) aufweist, und dass die elektronische Steuerungseinheit (31) zur Ansteuerung des Leuchtmittels (41) eingerichtet ist.

7. Vorrichtung nach einem der vorstehenden Ansprüche, **dadurch gekennzeichnet, dass** das Bedienelement (4) wenigstens ein Betätigungselement (43) aufweist, und dass die elektronische Steuerungseinheit (31) zur Kommunikation mit dem Betätigungselement (43) eingerichtet ist.

8. Vorrichtung nach einem der vorstehenden Ansprüche, **dadurch gekennzeichnet, dass** die Schaltabdeckung (3) wenigstens ein weiteres Bedienelement, insbesondere eine Taste (33), vorzugsweise eine Parksperrebetätigungstaste, umfasst.

9. Vorrichtung nach einem der vorstehenden Ansprüche, **dadurch gekennzeichnet, dass** das Bedienelement (4) über wenigstens eine zweite elektrische Leitung (62) mit einem Bordnetz (5), insbesondere mit einer Stromversorgung, verbunden ist.

10. Vorrichtung nach dem vorstehenden Anspruch, **dadurch gekennzeichnet, dass** die zweite elektrische Leitung (62) durch die Schaltbetätigung (2) verläuft.

## Claims

1. Device (1) for gear stage selection for a motor vehicle, in particular an automatic transmission vehicle or electric vehicle, comprising a selector actuator (2), a selector cover (3), and an operating element (4) movable relative to the selector actuator (2), the selector cover (3) covering the selector actuator (2) toward the vehicle interior and being fixedly connected to the selector actuator (2), and wherein the selector cover (3) comprises an electronic control unit (31), **characterized in that** the operating element (4) is connected to the selector cover (3) via at least a first electrical line (61).

2. Device according to Claim 1, **characterized in that** the selector cover (3) has a first interface (32) **and in that** the operating element (4) has a second interface (42).

3. Device according to either of the preceding claims, **characterized in that** the first electrical line (61) directly connects the operating element (4) and the selector cover (3), in particular **in that** the first electrical line (61) directly connects the first interface (32) and the second interface (42).

4. Device according to Claims 1 or 2, **characterized in that** the first electrical line (61) runs through the selector actuator (2).

5. Device according to Claim 4, **characterized in that** the selector actuator (2) has a third interface (21) and a fourth interface (22), wherein the first electrical line (61) comprises at least one intermediate line (23), in particular **in that** the intermediate line (23) connects the third interface (21) and the fourth interface (22).

6. Device according to any one of the preceding claims, **characterized in that** the operating element (4) has at least one lamp (41), **and in that** the electronic control unit (31) is configured to activate the lamp (41).

7. Device according to any one of the preceding claims, **characterized in that** the operating element (4) has at least one actuating element (43), **and in that** the electronic control unit (31) is configured to communicate with the actuating element (43).

8. Device according to any one of the preceding claims, **characterized in that** the selector cover (3) comprises at least one further operating element, in particular a button (33), preferably a parking lock actuation button.

9. Device according to any one of the preceding claims, **characterized in that** the operating element (4) is connected via at least a second electrical line (62) to a vehicle electrical system (5), in particular to a power supply.

10. Device according to the preceding claim, **characterized in that** the second electrical line (62) runs through the selector actuator (2).

## Revendications

1. Dispositif (1) de sélection des plages de vitesse pour un véhicule automobile, en particulier un véhicule avec transmission automatique ou véhicule électrique, comprenant une commande de changement de vitesse (2), un couvercle de commutation (3) et un élément de commande (4) qui peut être déplacé par rapport à la commande de changement de vitesse (2), le couvercle de commutation (3) couvrant la commande de changement de vitesse (2) dans la direction de l'intérieur du véhicule et étant connecté de manière fixe à la commande de changement de vitesse (2) et le couvercle de commutation (3) comprenant une unité de commande électronique (31), **caractérisé en ce que** l'élément de commande (4) est relié au couvercle de commutation (3) par le biais d'au moins un premier câble électrique (61).

2. Dispositif selon la revendication 1, **caractérisé en ce que** le couvercle de commutation (3) présente une première interface (32) **et en ce que** l'élément de commande (4) présente une deuxième interface (42).

3. Dispositif selon l'une quelconque des revendications précédentes, **caractérisé en ce que** le premier câble électrique (61) connecte directement l'élément de commande (4) et le couvercle de commutation (3), en particulier **en ce que** le premier câble électrique (61) connecte directement la première interface (32) et la deuxième interface (42).

4. Dispositif selon la revendication 1 ou 2, **caractérisé en ce que** le premier câble électrique (61) s'étend à travers la commande de changement de vitesse (2).

5. Dispositif selon la revendication 4, **caractérisé en ce que** la commande de changement de vitesse (2) présente une troisième interface (21) et une quatrième interface (22), le premier câble électrique (61) comprenant au moins un câble intermédiaire (23), en particulier **en ce que** le câble intermédiaire (23) connecte la troisième interface (21) et la quatrième interface (22).

6. Dispositif selon l'une quelconque des revendications précédentes, **caractérisé en ce que** l'élément de commande (4) présente au moins une source d'éclairage (41) **et en ce que** l'unité de commande électronique (31) est conçue pour la commande de la source d'éclairage (41).

7. Dispositif selon l'une quelconque des revendications précédentes, **caractérisé en ce que** l'élément de commande (4) présente au moins un élément d'actionnement (43) **et en ce que** l'unité de commande électronique (31) est conçue pour communiquer avec l'élément d'actionnement (43).

8. Dispositif selon l'une quelconque des revendications précédentes, **caractérisé en ce que** le couvercle de commutation (3) comprend au moins un autre élément de commande, en particulier une touche (33), de préférence une touche d'actionnement de frein de stationnement.

9. Dispositif selon l'une quelconque des revendications précédentes **caractérisé en ce que** l'élément de commande (4) est connecté par le biais d'au moins un deuxième câble électrique (62) à un réseau de bord (5), en particulier à une alimentation électrique.

10. Dispositif selon la revendication précédente, **caractérisé en ce que** le deuxième câble électrique (62) s'étend à travers la commande de changement de vitesse (2).
